# EUROPÄISCHE PATENTANMELDUNG

(11) **EP 2 081 022 A1**
(43) Veröffentlichungstag der Anmeldung: **22.07.2009**
(21) Anmeldenummer: 08007390.1
(22) Anmeldetag: 15.04.2008
(51) Int. Cl.: G01N 29/02

(54) **Verfahren und Vorrichtung für Rohreinfrierungen**

(30) Priorität: 15.01.2008 DE 102008004466
(71) Anmelder: Linde Aktiengesellschaft, 80807 München (DE)
(72) Erfinder: Blanke, Martin, Riemerling (DE); Bühling, Lutz Dr., 38442 Wolfsburg (DE)
(74) Vertreter: Gellner, Bernd

(57) **Zusammenfassung**

Die Erfindung betrifft ein Verfahren zur Prüfung des Aggregatszustandes eines Fluids in einem vorbestimmten Bereich einer Leitung oder eines Behälters nach Beendigung oder während einer von außen an die Leitung oder den Behälter in diesem Bereich anliegenden Kältezufuhr zum zumindest partiellen Einfrieren des Inhalts der fluidführenden Leitung oder des fluidgefüllten Behälters, **dadurch gekennzeichnet, dass** zur Prüfung des Aggregatszustandes des Fluids in einem vorbestimmten Bereich der Leitung oder des Behälters ein Messgerät eingesetzt wird, das einen Sender und einen Empfänger für Ultraschall sowie eine Auswertungseinheit umfasst, wobei mit diesem Messgerät die Unterschiede in der Ausbreitung der Ultraschallwellen in Feststoffen, Flüssigkeiten und Gasen ermittelt und ausgewertet werden. Des Weiteren betrifft die Erfindung eine Vorrichtung zur Durchführung des Verfahrens.

## Beschreibung

Die Erfindung betrifft ein Verfahren sowie eine Vorrichtung zur Durchführung des Verfahrens zur Prüfung des Aggregatszustandes eines Fluids in einem vorbestimmten Bereich einer Leitung oder eines Behälters nach Beendigung oder während einer von außen an die Leitung oder den Behälter in diesem Bereich anliegenden Kältezufuhr zum zumindest partiellen Einfrieren des Inhalts der fluidführenden Leitung oder des fluidgefüllten Behälters.

Die Ermittlung des Aggregatszustandes eines Fluids, das von einer Wandung umgeben ist, deren Inneres nicht einsehbar und nicht über Öffnungen zugänglich ist, stellt die Messtechnik vor Schwierigkeiten. Bei vielen technischen Anwendungen ist es nicht möglich, die Wandung zur Ermittlung des Aggregatszustandes zu öffnen, weil es sich z.B. um ein geschlossenes System handelt, das nach einem Öffnen erst wieder aufwändig in einen betriebsbereiten Zustand gebracht werden müsste oder weil das Fluid für die Umwelt als bedenklich eingestuft wird und deshalb ein Entweichen, auch kleiner Mengen, wie es vermutlich beim Öffnen stattfinden würde, vermieden werden soll.

Gleichzeitig ist es aber z.B. für Wartungsarbeiten an einem fluidführenden System sehr wichtig zu wissen, in welchem Aggregatszustand sich ein derartiges Fluid befindet, da die oben beschriebenen Probleme des Entweichens nicht mehr auftreten, sobald das Fluid in den festen Aggregatszustand überführt werden konnte.

Bekannt ist es, für Wartungsarbeiten an fluidführenden Rohrleitungen das Fluid in der Regel in einem Teilbereich in den festen Aggregatszustand zu überführen und so eine Art Pfropfen zu erzeugen, der die Leitung im Inneren temporär verschließt. Die Überführung in den festen Aggregatszustand kann z.B. durch Gefrieren des Fluids erfolgen. Dazu wird von außen an die Leitung oder an einen fluidgefüllten Behälter Kälte zugeführt.

Bei den herkömmlichen Methoden ist eine zuverlässige Bestimmung des Aggregatszustands bei Rohreinfrierungen schwierig aber sehr wichtig, da nur eine zuverlässig erstellter Frostkörper im Inneren der Leitung ein sicheres Durchführen von Wartungsarbeiten, bei denen die Rohrleitung geöffnet werden muss, ermöglicht. Bislang werden als Indikatoren die äußere Bereifung der Rohrleitung und Druckmessungen verwendet. Diese Methode muss jedoch als nicht in dem gewünschten Maße zuverlässig angesehen werden.

Aufgabe der vorliegenden Erfindung ist es ein verbessertes Verfahren sowie eine verbesserte Vorrichtung zur Durchführung des Verfahrens zum zumindest partiellen Einfrieren des Inhalts einer fluidführenden Leitung oder eines fluidgefüllten Behälters und zur Prüfung des Aggregatszustandes des Fluids in einem vorbestimmten Bereich der Leitung oder des Behälters zur Verfügung zu stellen.

Die gestellte Aufgabe wird verfahrensseitig dadurch gelöst, dass zur Prüfung des Aggregatszustandes des Fluids in einem vorbestimmten Bereich der Leitung oder des Behälters ein Messgerät eingesetzt wird, das einen Sender und einen Empfänger für Ultraschall sowie eine Auswertungseinheit umfasst, wobei mit diesem Messgerät die Unterschiede in der Ausbreitung der Ultraschallwellen in Feststoffen, Flüssigkeiten und Gasen ermittelt und ausgewertet werden.

Dabei kann für die Kältezufuhr der Leitung oder dem Behälter in diesem Bereich eine Manschette angelegt und dann ein Kaltgas zwischen die Manschette und die Wandung der Leitung oder des Behälters geleitet werden, wodurch über die Wandung ein Wärmetausch mit dem Inhalt der Leitung oder des Behälters erreicht wird, durch den der Inhalt abgekühlt und in den festen Aggregatszustand überführt wird.

Als Kaltgas kommen hierbei vorteilhaft kryogene Gase wie z.B. flüssiger Stickstoff, Trockeneis oder flüssiges Kohlendioxid zum Einsatz.

Unter dem Begriff Leitung sollen hier sowohl ein starres Rohr oder eine Rohrleitung von beliebigem Querschnitt als auch eine flexible Rohrleitung oder ein Schlauch verstanden werden.

Beispielsweise werden als Sender und Empfänger sogenannte Ultraschall-Sensoren eingesetzt, die beispielsweise als Piezo-Sensoren, insbesondere als keramische Piezo-Sensoren, ausgebildet und geeignet sind, Ultraschallwellen auszusenden und zu empfangen. Eine andere Möglichkeit besteht darin eine andere Quelle für Ultraschallwellen einzusetzen und lediglich als Empfänger einen Piezo-Sensor, insbesondere einen keramischen Piezo-Sensor zu verwenden. In einer weiteren Ausführungsform der Erfindung wird ein sogenannter Impuls-Echo-Sensor eingesetzt, der sowohl als Sender als auch als Empfänger dient.

Alternativ zum Kaltgaseinsatz kann ein Peltierelement zur Bereitstellung der Kältezufuhr Verwendung finden.

Die Kältezufuhr dient dazu einen Frostkörper im Inneren der Leitung oder des Behälters zu erstellen, der in der Regel in der Form eines Pfropfens ausgebildet werden soll um z.B. in einer Leitung den Durchfluss zu blockieren. Es können dann in Strömungsrichtung abwärts des Pfropfens Wartungs- oder Reparaturarbeiten durchgeführt werden, bei denen in diesem Bereich die Leitung oder ein Behälter oder eine Aufweitung der Leitung geöffnet werden, ohne dass die Gefahr besteht, dass Fluid entweichen könnte.

Die Ultraschallwellen werden abhängig vom Aggregatszustand des durchschallten Mediums bzw. Fluids unterschiedlich übertragen und an den Grenzflächen flüssig/gasförmig oder fest/gasförmig nahezu vollständig reflektiert.

Die Auswertungseinheit dient dazu, die Unterschiede in der Ausbreitung der Ultraschallwellen in Feststoffen, Flüssigkeiten und Gasen als Mess-Signale zu ermittelt und auszuwerten. Die Auswertung erfolgt z.B. mit Hilfe von Vergleichsdaten für die Reflektion und/oder Transmission der Ultraschallwellen. Damit lässt sich zuverlässig erkennen, welchen Aggregatszustand bzw. welche Aggregatszustände das durchschallte Innere einer Leitung oder eines Behälters aufweist.

Bevorzugt werden gepulste Ultraschallwellen eingesetzt, insbesondere gepulste Longitudinalwellen und/oder gepulste Transversalwellen. Dabei hat sich herausgestellt, dass die gepulsten Longitudinalwellen besonders zur Durchschallung von Feststoffen und/oder Flüssigkeiten geeignet sind. Hingegen die gepulsten Transversalwellen sich besonders zur Durchschallung von Feststoffen eignen.

Gemäß einer besonders bevorzugten Ausführungsform der Erfindung wird eine Wärmequelle, insbesondere ein Heizband, eingesetzt, um den Sender und/oder Empfänger auf Raumtemperatur zu halten. Diese ist besonders zu empfehlen, wenn als Sender und/oder Empfänger empfindliche Sensoren, wie z.B. die bereits beschriebenen Piezo-Sensoren, Verwendung finden. Somit werden die Sensoren vor übermäßiger Kälte geschützt, die die Sensoren schädigen könnte. Da z.B. bei Verwendung einer Gefriermanschette die Oberfläche dieser Gefriermanschette in der Regel um ein Vielfaches größer sein wird als die Ankoppelungsfläche des Sensors, genügt eine Wärmequelle mit einer sehr kleinen Heizleistung, um den gewünschten Effekt, den Sender und/oder Empfänger auf Raum- oder Normaltemperatur zu halten, zu erreichen. Daher stört eine solche Wärmequelle den Vorgang des Gefrierens nicht merklich und kann daher im Verfahren gut toleriert werden, zumal der Vorteil des Schutzes eines empfindlichen Messgerätes in dieser Ausführungsform besondere Beachtung findet.

Gemäß einer vorteilhaften Weiterbildung der Erfindung werden die Position oder die Positionen des Senders und/oder Empfängers während des Messvorgangs verändert. Veränderliche Positionen ermöglichen die Bestimmung von Maxima und Minima der Amplitude und der Laufzeit der übertragenen bzw. reflektierten Transversal- und/oder Longitudinalwellen. Dies ist sowohl bei einer sog. Durchschallungsanordnung (Sender und Empfänger getrennt, in der Regel gegenüberliegend) als auch bei einer sog. Impuls/Echo-Anordnung (ein Sende- und Empfangsprüfkopf) möglich.

Aus den Messwerten kann ermittelt werden, ob sich noch gasförmiges und/oder flüssiges Fluid in dem von dem Messgerät erfassten Bereich der Leitung oder des Behälters befindet, oder ob das Fluid in dem untersuchten Bereich bereits vollständig gefroren ist, also in den festen Aggregatszustand überführt wurde.

Vorrichtungsseitig wird die gestellte Aufgabe dadurch gelöst, dass zur Prüfung des Aggregatszustandes des Fluids in einem vorbestimmten Bereich der Leitung oder des Behälters ein Messgerät vorgesehen ist, das einen Sender und einen Empfänger für Ultraschall sowie eine Auswertungseinheit umfasst, wobei das Messgerät geeignet ausgebildet ist, die Unterschiede in der Ausbreitung der Ultraschallwellen in Feststoffen, Flüssigkeiten und Gasen zu erfassen und auszuwerten.

Bevorzugt sind für die Kältezufuhr die Leitung oder den Behälter in diesem Bereich umgebend eine Manschette sowie eine Kaltgaszuführung zwischen die Manschette und die Wandung der Leitung oder des Behälters vorgesehen, wodurch über die Wandung ein Wärmetausch mit dem Inhalt der Leitung oder des Behälters erreicht wird, durch den der Inhalt abgekühlt und in den festen Aggregatszustand überführt wird.

Alternativ kann ein Peltierelement zur Bereitstellung der Kältezufuhr vorgesehen werden.

Bevorzugt sind Sender und Empfänger getrennt voneinander, jeweils einander gegenüberliegend an zwei verschiedenen Seiten der Leitung oder Behälters vorgesehen. Diese Anordnung entspricht der sog. Durchschallungsanordnung.

Gemäß einer anderen vorteilhaften Weiterbildung der Erfindung sind Sender und Empfänger gleichseitig in einer sogenannten Echo-Anordnung positioniert.

Mit besonderem Vorteil sind Sender und/oder Empfänger in ihrer Position veränderbar ausgebildet. Veränderliche Positionen ermöglichen die Bestimmung von Maxima und Minima der Amplitude und der Laufzeit der übertragenen bzw. reflektierten Transversal- und/oder Longitudinalwellen.

Gemäß einer bevorzugten Weiterbildung der Erfindung ist eine Wärmequelle, insbesondere ein Heizband, vorgesehen, um den Sender und/oder Empfänger auf Raumtemperatur zu halten.

Bevorzugt sind der Sender und der Empfänger zum Senden bzw. Empfangen von gepulsten Ultraschallwellen, insbesondere von gepulsten Longitudinalwellen und/oder gepulsten Transversalwellen, geeignet ausgebildet.

Die Erfindung bietet eine ganze Reihe von Vorteilen, von denen im Folgenden nur einige beispielhaft genannt werden:

Die Erfindung ermöglicht ein zerstörungsfreies Messen und eine sichere Bestimmung des Aggregatszustandes im Inneren einer Leitung oder eines Behälters in einem von der Messanordnung erfassten Bereich der Leitung oder des Behälters. Durch die Ausbildung eines Pfropfens wird eine sicheres Arbeiten stromabwärts des Pfropfens oder bei einem Behälter z.B. oberhalb einer Sperrschicht anstelle des Pfropfens ermöglicht. Besonders bei einem Behälter kann es auch eine interessante Weiterbildung des Erfindungsgedankens darstellen, den gesamten Inhalt des Behälters zu gefrieren und den Messbereich des erfindungsgemäßen Messgerätes entsprechend auszudehnen.

Die vorliegende Erfindung eignet sich neben dem Rohrgefrieren auch für eine Reihe von Einsatzzwecken im Industrieservice und ist für eine Verwendung beim Baugrundvereisen anpassbar.

Die Erfindung sowie weitere Ausgestaltungen der Erfindung werden im Folgenden anhand der in den Figuren dargestellten Ausführungsbeispiele näher erläutert. Die Figuren zeigen:
- Figur 1: eine erfindungsgemäße Vorrichtung (schematisch),
- Figur 2: je eine erfindungsgemäße Vorrichtung an einer Leitung beinhaltend jeweils verschiedene Aggregatszustände eines Fluids in verschiedenen Bereichen einer Leitung entsprechend dem Fortschritt eines Gefriervorgangs.

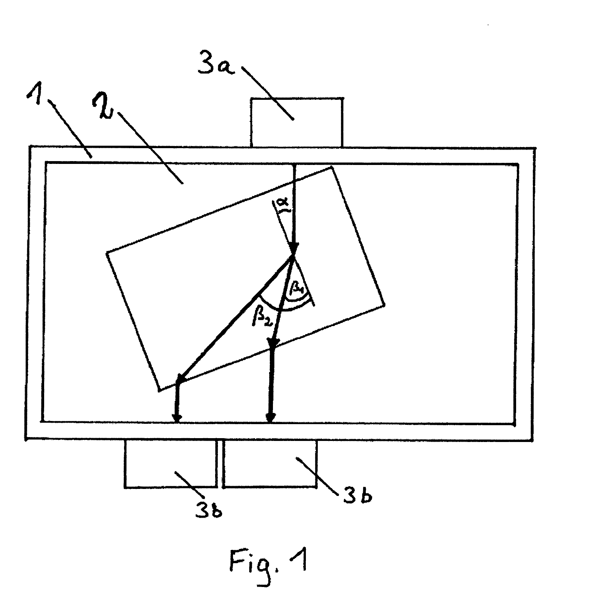

Im Einzelnen zeigt die Figur 1 einen Bereich 2 einer Leitung 1, wobei die Leitung 1 im Querschnitt dargestellt ist. Ein Messgerät 3 weist einen Sender 3a sowie einen Empfänger 3b auf. In diesem Beispiel ist die Position des Empfängers 3b veränderlich und es sind zwei mögliche Positionen dargestellt.

In dem Kasten innerhalb der Figur 1 sind schematisch die Verhältnisse an einer Grenzfläche von flüssig zu fest dargestellt. Dabei bezeichnet alpha den Winkel zwischen der Normalen auf die Grenzfläche und der Einfallsrichtung der Ultraschallwellen. An der Grenzfläche ändert sich die Ausbreitungsrichtung der Ultraschallwellen und zwar gilt gemäß der Darstellung ein Winkel beta 1 für transversale Ultraschallwellen und ein Winkel beta 2 für longitudinale Ultraschallwellen.

Die im Empfänger 3b eintreffenden Signale in Kombination mit der Position des Empfängers 3b ermöglichen eine Bestimmung des Aggregatszustandes z.B. deshalb, weil festgestellt werden kann, ob die Ultraschallwellen keine, eine, zwei oder mehrere Grenzflächen auf ihrem Weg durch den Leitungsquerschnitt passiert haben. Keine entspricht dabei keinem oder einem vollständig erstellten Frostkörper. Zur weiteren Analyse müssen in diesem Fall weitere Kriterien, wie z.B. die Intensität der ankommenden Ultraschallwellen, herangezogen werden, da sich der Transmissionsanteil bei der Durchstrahlung einer Flüssigkeit oder eines Festkörpers in der Regel unterscheidet.

Eine Grenzfläche flüssig-fest hingegen weist auf einen einseitig platzierten, noch nicht vollständig ausgebildeten Frostkörper hin. Bei einem mittig schwimmenden, noch nicht vollständigen Frostkörper würde man detektieren, dass die Ultraschallwellen zweimal eine Grenzfläche passiert haben. Bei noch mehr Grenzflächen müsste man von einem zersplitterten, erst teilweise erstellten Frostkörper ausgehen. Dies sind allerdings nur Interpretationsbeispiele. In der Praxis gibt es eine Vielzahl von Möglichkeiten und Auswertungsmethoden.

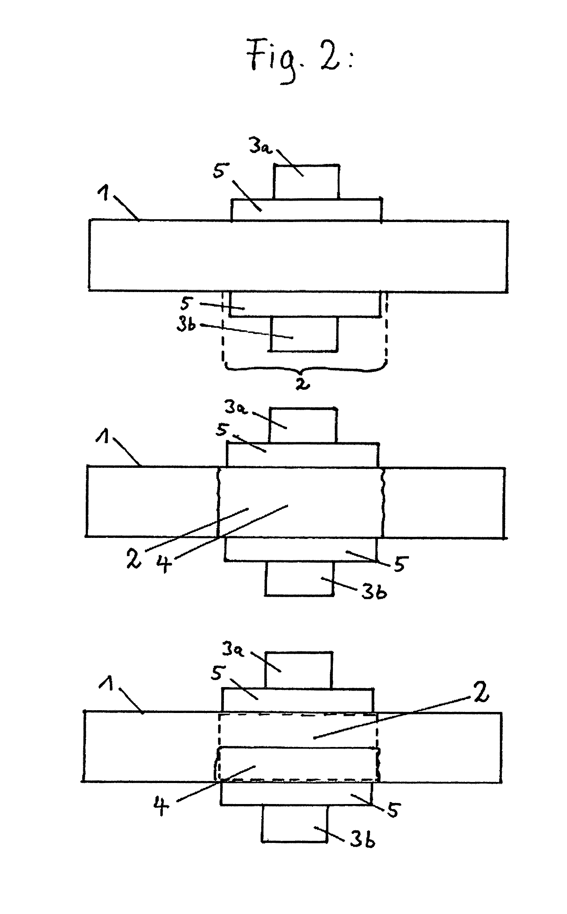

Die Figur 2 zeigt eine Leitung 1 im Längsschnitt, die von einer Manschette 5 zur Aufnahme von Kaltgas im Bereich 2 umgeben ist und jeweils einen Sender 3a und einen Empfänger 3 b, die einander gegenüberliegend oben und unten an der Leitung 1 angebracht sind. Die Manschette 5 stört diese Anbringung nicht. Die Figur 2 zeigt für die beschriebene Anordnung eine Abfolge von folgenden Zuständen: Oben ist zu sehen, dass noch kein Frostkörper erstellt wurde und der gesamte Inhalt der Leitung 1 homogen als flüssig bezeichnet werden kann. In der Mitte ist ein vollständig erstellter Frostkörper 4 im Bereich 2 gezeigt. In der Darstellung unten hingegen ist der Frostkörper 4 noch nicht vollständig, sondern erst zum Teil erstellt. In diesem Fall wird der Frostkörper 4 deshalb als noch nicht vollständig erstellt bezeichnet, weil er den in diesem Längsschnitt der Leitung dargestellten Bereich 2 noch nicht vollständig ausfüllt bzw. weil er in einem geeigneten Querschnitt der Leitung (nicht dargestellt) die Schnittebene noch nicht vollständig ausfüllen würde. Bei den meisten Anwendungsfällen der vorliegenden Erfindung ist eine solch vollständiges Ausfüllen in einem bestimmten Bereich, z.B. sichtbar in einer Querschnittsebene, angestrebt, um z.B. eine Pfropfenwirkung und somit eine die Leitung in diesem Bereich absperrende Wirkung durch den Frostkörper zu erzielen.

## Patentansprüche

1. Verfahren zur Prüfung des Aggregatszustandes eines Fluids in einem vorbestimmten Bereich einer Leitung oder eines Behälters nach Beendigung oder während einer von außen an die Leitung oder den Behälter in diesem Bereich anliegenden Kältezufuhr zum zumindest partiellen Einfrieren des Inhalts der fluidführenden Leitung oder des fluidgefüllten Behälters, **dadurch gekennzeichnet, dass** zur Prüfung des Aggregatszustandes des Fluids in einem vorbestimmten Bereich der Leitung oder des Behälters ein Messgerät eingesetzt wird, das einen Sender und einen Empfänger für Ultraschall sowie eine Auswertungseinheit umfasst, wobei mit diesem Messgerät die Unterschiede in der Ausbreitung der Ultraschallwellen in Feststoffen, Flüssigkeiten und Gasen ermittelt und ausgewertet werden.

2. Verfahren nach Anspruch 1, **dadurch gekennzeichnet, dass** gepulste Ultraschallwellen eingesetzt werden, insbesondere gepulste Longitudinalwellen und/oder gepulste Transversalwellen.

3. Verfahren nach Anspruch 1 oder 2, **dadurch gekennzeichnet, dass** eine Wärmequelle, insbesondere ein Heizband, eingesetzt wird, um den Sender und/oder Empfänger auf Raumtemperatur zu halten.

4. Verfahren nach einem der Ansprüche 1 bis 3, **dadurch gekennzeichnet, dass** die Position oder die Positionen des Senders und/oder Empfängers während des Messvorgangs verändert werden.

5. Vorrichtung zur Prüfung des Aggregatszustandes eines Fluids in einem vorbestimmten Bereich einer Leitung oder eines Behälters nach Beendigung oder während einer von außen an die Leitung oder den Behälter in diesem Bereich anliegenden Kältezufuhr zum zumindest partiellen Einfrieren des Inhalts der fluidführenden Leitung oder des fluidgefüllten Behälters, **dadurch gekennzeichnet, dass** zur Prüfung des Aggregatszustandes des Fluids in einem vorbestimmten Bereich der Leitung oder des Behälters ein Messgerät vorgesehen ist, das einen Sender und einen Empfänger für Ultraschall sowie eine Auswertungseinheit umfasst, wobei das Messgerät geeignet ausgebildet ist, die Unterschiede in der Ausbreitung der Ultraschallwellen in Feststoffen, Flüssigkeiten und Gasen zu erfassen und auszuwerten.

6. Vorrichtung nach Anspruch 5, **dadurch gekennzeichnet, dass** Sender und Empfänger getrennt voneinander, jeweils einander gegenüberliegend an zwei verschiedenen Seiten der Leitung oder des Behälters vorgesehen sind.

7. Vorrichtung nach Anspruch 5, **dadurch gekennzeichnet, dass** Sender und Empfänger gleichseitig in einer sogenannten Echo-Anordnung positioniert sind.

8. Vorrichtung nach einem der Ansprüche 5 bis 7, **dadurch gekennzeichnet, dass** Sender und/oder Empfänger in ihrer Position veränderbar ausgebildet sind.

9. Vorrichtung nach einem der Ansprüche 5 bis 8, **dadurch gekennzeichnet, dass** eine Wärmequelle, insbesondere ein Heizband, vorgesehen ist, um den Sender und/oder Empfänger auf Raumtemperatur zu halten.

10. Vorrichtung nach Anspruch 3, **dadurch gekennzeichnet, dass** der Sender und der Empfänger zum Senden bzw. Empfangen von gepulsten Ultraschallwellen, insbesondere von gepulsten Longitudinalwellen und/oder gepulsten Transversalwellen, geeignet ausgebildet sind.

11. Vorrichtung nach einem der Ansprüche 5 bis 10, **dadurch gekennzeichnet, dass** der Sender auch als Empfänger dient.
